# EUROPEAN PATENT SPECIFICATION

(11) **EP 3 051 688 B1**
(45) Date of publication and mention of the grant of the patent: **06.03.2019**
(21) Application number: 16153132.2
(22) Date of filing: 28.01.2016
(51) Int. Cl.: H02N 2/10, H02N 2/00, B25J 9/12

(54) **PIEZOELECTRIC DRIVE DEVICE, ROBOT, AND DRIVE METHOD OF ROBOT**
PIEZOELEKTRISCHE ANTRIEBSVORRICHTUNG, ROBOTER UND ANTRIEBSVERFAHREN FÜR DEN ROBOTER
DISPOSITIF D'ENTRAÎNEMENT PIÉZO-ÉLECTRIQUE, ROBOT ET PROCÉDÉ DE COMMANDE DE ROBOT

(30) Priority: 30.01.2015 JP 2015016928
(43) Date of publication of application: 03.08.2016
(73) Proprietor: Seiko Epson Corporation, Tokyo 163-0811 (JP)
(72) Inventor: Arakawa, Yutaka, Nagano, 392-8502 (JP); Konishi, Akio, Nagano, 392-8502 (JP)
(74) Representative: Hoffmann Eitle

(56) References cited:
- EP-A1- 0 706 226
- EP-A1- 2 985 903
- US-A1- 2014 352 459
- US-B2- 8 797 661
- MRACEK M ET AL: "Driving concepts for bundled ultrasonic linear motors", JOURNAL OF ELECTROCERAMICS, vol. 20, no. 3-4, 17 May 2007 (2007-05-17) , pages 153-158, XP019606958, ISSN: 1573-8663

## Description

### BACKGROUND

### 1. Technical Field

The present invention relates to a piezoelectric drive device, a robot, and a drive method of a robot.

### 2. Related Art

JP-A-2004-260990, and corresponding US Patent No. 7105984, discloses that one driven body and multiple actuators for driving the driven body are provided so as to drive the driven body by causing the respective actuators to cooperate with each other.

However, JP-A-2004-260990 does not sufficiently consider that driving the respective actuators may cause vibrations or a backlash of the driven body.

A piezoelectric drive device according to the preamble of claim 1 is disclosed by EP-A1-0 706 226.

### SUMMARY

The object of the invention is to solve at least a part of the problems described above, and the invention can be implemented as the following forms or application examples.
(1) An aspect of the invention provides a piezoelectric drive device as recited in claim 1. The piezoelectric drive device includes multiple piezoelectric drive units that drive a driven member. Each of the multiple piezoelectric drive units has a vibrating plate, a piezoelectric vibrating body which is disposed on the vibrating plate, and a contact member which can come into contact with the driven member. The multiple piezoelectric drive units belong to a first piezoelectric drive unit group and a second piezoelectric drive unit group. The respective contact members of the multiple piezoelectric drive units belonging to the first piezoelectric drive unit group are arranged at a position which is symmetrical to a movement center axis or a movement center line of the driven member. The respective contact members of the multiple piezoelectric drive units belonging to the second piezoelectric drive unit group are arranged at a position which is symmetrical to a movement center axis or a movement center line of the driven member. A timing when the respective contact members of the first piezoelectric drive unit group press the driven member is different from a timing when the respective contact members of the second piezoelectric drive unit group press the driven member. According to this aspect, the respective contact members of the multiple piezoelectric drive units belonging to the first piezoelectric drive unit group are arranged at the position which is symmetrical to the movement center axis or the movement center line of the driven member. The respective contact members of the multiple piezoelectric drive units belonging to the second piezoelectric drive unit group are arranged at the position which is symmetrical to the movement center axis or the movement center line of the driven member. Therefore, it is possible to minimize vibrations or a backlash of the driven member.
(2) In the piezoelectric drive device, timings when the respective contact members of the first piezoelectric drive unit group press the driven member may be the same as each other, and timings when the respective contact members of the second piezoelectric drive unit group press the driven member may be the same as each other. According to this aspect, the timings when the respective contact members of the first piezoelectric drive unit group press the driven member are the same as each other, and the timings when the respective contact members of the second piezoelectric drive unit group press the driven member are the same as each other. Therefore, it is possible to minimize vibrations or a backlash of the driven member.
(3) In the piezoelectric drive device, the driven member may have a disc shape, the respective contact members of the first piezoelectric drive unit group may be arranged at a point symmetry position or a rotation symmetry position with respect to the movement center axis, and the respective contact members of the second piezoelectric drive unit group may be arranged at a point symmetry position or a rotation symmetry position with respect to the movement center axis. According to this aspect, when the driven member has the disc shape, it is possible to minimize vibrations or a backlash of the driven member.
(4) In the piezoelectric drive device, the geometric center of gravity of contact points with which the respective contact members of the first piezoelectric drive unit group come into contact, and the geometric center of gravity of contact points with which the respective contact members of the second piezoelectric drive unit group come into contact may be located at a position of the movement center axis. According to this aspect, the geometric center of gravity of the contact points with which the respective contact members of the first piezoelectric drive unit group come into contact, and the geometric center of gravity of the contact points with which the respective contact members of the second piezoelectric drive unit group come into contact are located at the position of the movement center axis. Therefore, it is possible to minimize vibrations or a backlash of the driven member.
(5) In the piezoelectric drive device, the respective contact members of the first piezoelectric drive unit group may be separately arranged at opposite positions across the driven member, and the respective contact members of the second piezoelectric drive unit group may be separately arranged at opposite positions across the driven member. According to this aspect, the respective contact members of the first piezoelectric drive unit group are separately arranged at the opposite positions across the driven member, and the respective contact members of the second piezoelectric drive unit group are separately arranged at the opposite positions across the driven member. Therefore, it is possible to minimize vibrations or a backlash of the driven member.
(6) Another aspect of the invention provides a robot. The robot includes multiple link portions, a joint portion that connects the multiple link portions to each other, and the piezoelectric drive device that pivotally moves the multiple link portions in the joint portion according to any one of (1) to (5) described above. In this case, the piezoelectric drive device can be used for driving the robot.
(7) Still another aspect of the invention provides a method of driving said robot. The drive method includes driving the piezoelectric drive device by applying a cyclically varying voltage to the piezoelectric vibrating body, and pivotally moving the multiple link portions in the joint portion.

The invention can be implemented in various aspects. For example, in addition to the piezoelectric drive device, the invention can be implemented in various aspects such as a drive method of the piezoelectric drive device, a manufacturing method of the piezoelectric drive device, a robot having the piezoelectric drive device mounted thereon, a drive method of the robot having the piezoelectric drive device mounted thereon, a liquid feeding pump, a medication pump, and the like.

### BRIEF DESCRIPTION OF THE DRAWINGS

The invention will be described with reference to the accompanying drawings, wherein like numbers reference like elements.
Figs. 1A and 1B are respectively a plan view and a sectional view which illustrate a schematic configuration of a piezoelectric drive unit.
Fig. 2 is a plan view of a vibrating plate.
Fig. 3 is a view for describing an electrical connection state between the piezoelectric drive unit and a drive circuit.
Figs. 4A and 4B are views for describing an example of bending vibrations of the piezoelectric drive unit.
Figs. 5A to 5D are views for describing an arrangement of the piezoelectric drive unit in a piezoelectric drive device according to a first embodiment.
Figs. 6A to 6C are views for describing an arrangement of the piezoelectric drive unit in a piezoelectric drive device according to a second embodiment.
Figs. 7A and 7B are views for describing an arrangement of the piezoelectric drive unit in a piezoelectric drive device according to a third embodiment.
Fig. 8 is a view for describing a force applied to a rotor by a piezoelectric drive unit of a first piezoelectric drive unit group.
Figs. 9A to 9C are views for describing an arrangement of the piezoelectric drive unit in a piezoelectric drive device according to a fourth embodiment.
Figs. 10A to 10C are views for describing a piezoelectric drive device according to a modification example of the fourth embodiment.
Fig. 11 is a sectional view of a piezoelectric drive unit according to another embodiment of the invention.
Figs. 12A and 12B are plan views of a piezoelectric drive unit according to further another embodiment of the invention.
Fig. 13 is a view for describing an example of a robot which uses the above-described piezoelectric drive unit.
Fig. 14 is a view for describing a wrist portion of the robot.
Fig. 15 is a view for describing an example of a liquid feeding pump which uses the above-described piezoelectric drive unit.

### DESCRIPTION OF EXEMPLARY EMBODIMENTS

### Configuration of Piezoelectric Drive Unit

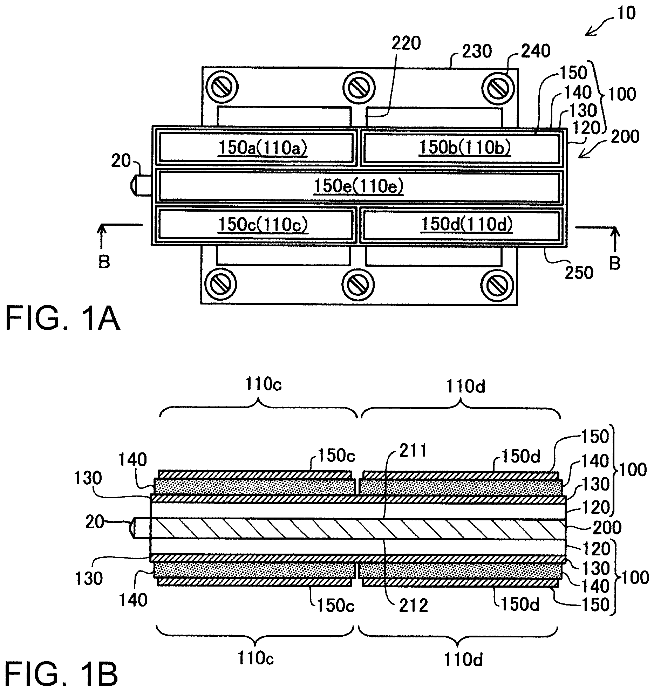

Fig. 1A is a plan view illustrating a schematic configuration of a piezoelectric drive unit 10 which is used in the invention. Fig. 1B is a sectional view of the piezoelectric drive unit 10, which is taken along line B-B in Fig. 1A. The piezoelectric drive unit 10 includes a vibrating plate 200 and two piezoelectric vibrating bodies 100 which are respectively arranged on both surfaces (first surface 211 (also referred to as a "front surface") and second surface 212 (also referred to as a "rear surface")) of the vibrating plate 200. The piezoelectric vibrating body 100 includes a substrate 120, a first electrode 130 which is formed on the substrate 120, a piezoelectric substance 140 which is formed on the first electrode 130, and a second electrode 150 which is formed on the piezoelectric substance 140. The first electrode 130 and the second electrode 150 interpose the piezoelectric substance 140 therebetween. The two piezoelectric vibrating bodies 100 are arranged symmetrical to each other around the vibrating plate 200. The two piezoelectric vibrating bodies 100 have the same configuration as each other. Thus, unless otherwise specified in the following, a configuration of the piezoelectric vibrating body 100 located on an upper side of the vibrating plate 200 will be described.

The substrate 120 of the piezoelectric vibrating body 100 is used as a substrate for forming the first electrode 130, the piezoelectric substance 140, and the second electrode 150 through a film forming process. The substrate 120 also has a function as a vibrating plate for mechanical vibrating. For example, the substrate 120 can be formed of Si, Al₂O₃, and ZrO₂. For example, as the substrate 120 made of silicon (hereinafter, also referred to as "Si"), it is possible to use a Si wafer for semiconductor manufacturing. According to this embodiment, a planar shape of the substrate 120 is rectangular. For example, preferably, the thickness of the substrate 120 is set to a range of 10 µm to 100 µm. If the thickness of the substrate 120 is set to 10 µm or greater, the substrate 120 can be relatively easily handled when the film forming process on the substrate 120 is performed. If the thickness of the substrate 120 is set to 100 µm or smaller, the substrate 120 can be easily vibrated in response to expansion or contraction of the piezoelectric substance 140 formed of a thin film.

The first electrode 130 is formed as one continuous conductive layer which is formed on the substrate 120. In contrast, as illustrated in Fig. 1A, the second electrode 150 is divided into five conductive layers 150a to 150e (also referred to as "second electrodes 150a t 150e"). The second electrode 150e located in the center is formed in a rectangular shape extending over the substantially whole body in the longitudinal direction of the substrate 120, in the center in the width direction of the substrate 120. The other four second electrodes 150a, 150b, 150c, and 150d have the same planar shape, and are formed at positions of four corners of the substrate 120. In an example illustrated in Figs. 1A and 1B, both the first electrode 130 and the second electrode 150 have a rectangular planar shape. For example, the first electrode 130 or the second electrode 150 is a thin film formed by means of sputtering. For example, as a material of the first electrode 130 or the second electrode 150, it is possible to use any highly conductive material such as Aluminum (Al), nickel (Ni), gold (Au), platinum (Pt), and iridium (Ir). Instead of configuring the first electrode 130 to include one continuous conductive layer, the first electrode 130 may be divided into five conductive layers having substantially the same planar shape as that of the second electrodes 150a to 150e. Wiring (or a wiring layer and an insulating layer) for electrical connection between the second electrodes 150a to 150e, and wiring (or a wiring layer and an insulating layer) for electrical connection between the first electrode 130 and the second electrodes 150a to 150e are omitted in the illustration in Figs. 1A and 1B.

The piezoelectric substance 140 is formed as five piezoelectric layers having substantially the same planar shape as that of the second electrodes 150a to 150e. Alternatively, the piezoelectric substance 140 may be formed as one continuous piezoelectric layer having substantially the same planar shape as that of the first electrode 130. Five piezoelectric elements 110a to 110e (refer to Fig. 1A) are configured to include a layered structure of the first electrode 130, the piezoelectric substance 140, and the second electrodes 150a to 150e.

For example, the piezoelectric substance 140 is a thin film formed using a sol-gel method or a sputtering method. As a material of the piezoelectric substance 140, it is possible to use any material which shows a piezoelectric effect, such as ceramics employing a Perovskite structure of ABO₃ type. For example, as the ceramics employing the Perovskite structure of ABO₃ type, it is possible to use lead zirconate titanate (PZT), barium titanate, lead titanate, potassium niobate, lithium niobate, lithium tantalate, sodium tungstate, zinc oxide, barium strontium titanate (BST), strontium bismuth tantalate (SBT), lead metaniobate, lead zinc niobate, scandium lead niobate, and the like. For example, in addition to the ceramic, it is also possible to use a material which shows a piezoelectric effect, such as polyvinylidene fluoride, a crystal, and the like. The thickness of the piezoelectric substance 140 is set to a range of 50 nm (0.05 µm) to 20 µm. A thin film of the piezoelectric substance 140 having the thickness in this range can be easily formed using a thin film forming process. Since the thickness of the piezoelectric substance 140 is set to 0.05 µm or greater, a sufficiently strong force can be generated in response to expansion or contraction of the piezoelectric substance 140. Since the thickness of the piezoelectric substance 140 is set to 20 µm or smaller, the piezoelectric drive unit 10 can be sufficiently miniaturized.

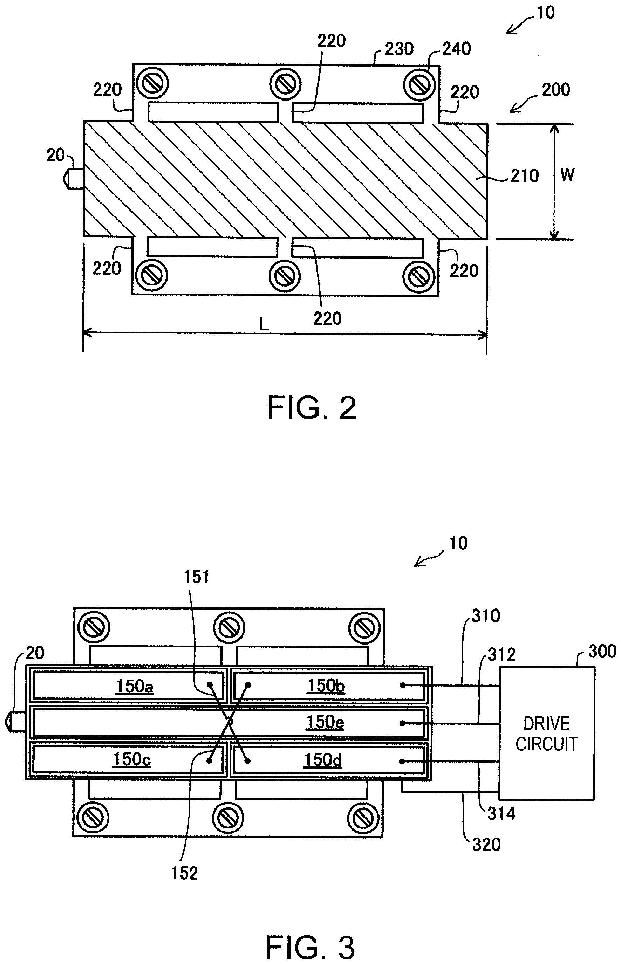

Fig. 2 is a plan view of the vibrating plate 200. The vibrating plate 200 has a rectangular vibrating body portion 210, and connection portions 220 which respectively triply extend from the right and left long sides of the vibrating body portion 210. In addition, the vibrating plate 200 has two attachment portions 230 which are respectively connected to the three connection portions 220 on the right and left sides. In Fig. 2, for convenience of illustration, the vibrating body portion 210 is hatched. The attachment portion 230 is used in order to attach the piezoelectric drive unit 10 to other members by using a screw 240. For example, the vibrating plate 200 can be formed of metal such as silicon, silicon compound, stainless steel, aluminum, aluminum alloy, titanium, titanium alloy, copper, copper alloy, iron-nickel alloy, and the like, metal oxide, or materials such as diamond and the like.

The piezoelectric vibrating bodies 100 (refer to Figs. 1A and 1B) respectively adhere to an upper surface (first surface) and a lower surface (second surface) of the vibrating body portion 210 by using an adhesive. Preferably, a ratio between a length L and a width W of the vibrating body portion 210 is set to L:W=approximately 7:2. The ratio is a preferred value used in order to perform ultrasonic vibrations (to be described later) by which the vibrating body portion 210 is bent to the right and left along its plane. For example, the length L of the vibrating body portion 210 can be set to a range of 0.1 mm to 30 mm. For example, the width W can be set to a range of 0.05 mm to 8 mm. Preferably, the length L is set to 50 mm or smaller in order for the vibrating body portion 210 to perform the ultrasonic vibrations. For example, the thickness (thickness of the vibrating plate 200) of the vibrating body portion 210 can be set to a range of 20 µm to 700 µm. If the thickness of the vibrating body portion 210 is set to 20 µm or greater, the vibrating body portion 210 has sufficient rigidity in order to support the piezoelectric vibrating body 100. If the thickness of the vibrating body portion 210 is set to 700 µm or smaller, the vibrating body portion 210 is enabled to have sufficiently large deformation in response to deformation of the piezoelectric vibrating body 100.

A contact member 20 is disposed on one short side of the vibrating plate 200. The contact member 20 can come into contact with a driven body so as to apply a force to the driven body. Preferably, the contact member 20 is formed of a durable material such as ceramics (for example, Al₂O₃).

Fig. 3 is a view for describing an electrical connection state between the piezoelectric drive unit 10 and a drive circuit 300. Among the five second electrodes 150a to 150e, a pair of the second electrodes 150a and 150d which are located at opposite angles are electrically connected to each other via a wire 151. A pair of the second electrodes 150b and 150c which are located other opposite angles are also electrically connected to each other via a wire 152. The wires 151 and 152 may be formed using a film forming process, or may be realized by means of wire-shaped wiring. The three second electrodes 150b, 150e, and 150d located on the right side in Fig. 3 and the first electrode 130 (refer to Figs. 1A and 1B) are electrically connected to the drive circuit 300 via wires 310, 312, 314, and 320. The drive circuit 300 applies a cyclically varying AC voltage or pulsating voltage between a pair of the second electrodes 150a and 150d and the first electrode 130. In this manner, the piezoelectric drive unit 10 is caused to perform the ultrasonic vibrations, thereby enabling a rotor (driven body) coming into contact with the contact member 20 to be rotated in a predetermined rotation direction. Here, the "pulsating voltage" means a voltage obtained by adding a DC offset to the AC voltage. A direction of the voltage (electric field) is one direction from one electrode toward the other electrode. The rotor coming into contact with the contact member 20 can be rotated in the opposite direction by applying the AC voltage or the pulsating voltage between the other pair of the second electrodes 150b and 150c and the first electrode 130. The voltage is simultaneously applied in the two piezoelectric vibrating bodies 100 disposed on both surfaces of the vibrating plate 200. Wiring (or a wiring layer and an insulating layer) configuring the wires 151, 152, 310, 312, 314, and 320 illustrated in Fig. 3 is omitted in the illustration in Figs. 1A and 1B.

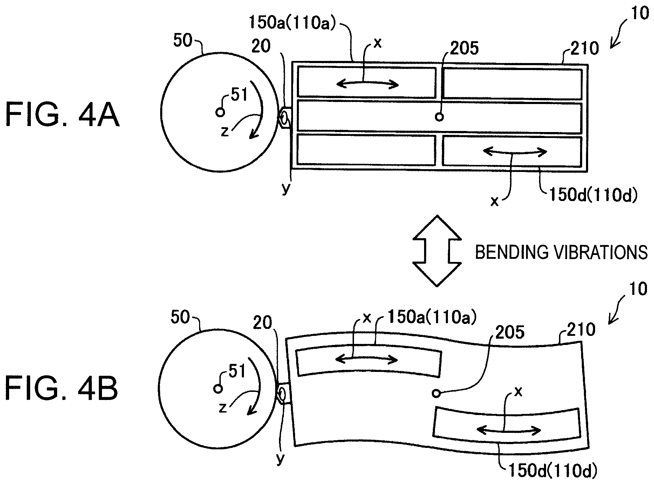

Figs. 4A and 4B are views for describing an example of bending vibrations of the piezoelectric drive unit 10. The contact member 20 of the piezoelectric drive unit 10 is in contact with an outer periphery of a rotor 50 functioning as a driven body. In an example illustrated in Figs. 4A and 4B, the drive circuit 300 (refer to Fig. 3) applies the AC voltage or the pulsating voltage between a pair of the second electrodes 150a and 150d which are arranged at first opposite angles and the first electrode 130, and the piezoelectric elements 110a and 110d expand and contract in a direction of an arrow x in Figs. 4A and 4B. In response to this, the vibrating body portion 210 of the piezoelectric drive unit 10 is alternately deformed into a straight shape which does not meander as illustrated in Fig. 4A and into a meandering shape (S-shape) which is bent inside a plane of the vibrating body portion 210 as illustrated in Fig. 4B. A distal end of the contact member 20 performs elliptical movement in a direction of an arrow y. As a result, the rotor 50 is rotated around a center 51 thereof in a first direction z (clockwise direction in Figs. 4A and 4B). According to the embodiment, the description that the vibrating body portion 210 is alternately deformed into the straight shape which does not meander as illustrated in Fig. 4A and into the meandering shape (S-shape) which is bent inside the plane of the vibrating body portion 210 as illustrated in Fig. 4B is referred to as bending vibrations. The three connection portions 220 (refer to Fig. 2) of the vibrating plate 200 described with reference to Fig. 2 are disposed at a position of a vibration knot (joint) of the vibrating body portion 210 described above. When the drive circuit 300 applies the AC voltage or the pulsating voltage between the other pair of the second electrodes 150b and 150c which are arranged at second opposite angles different from the first opposite angles and the first electrode 130, the rotor 50 is rotated in the opposite direction (second direction or counterclockwise direction). In the bending vibrations, the two piezoelectric elements 110a and 110d which are driven during clockwise rotation are located at a point symmetry position with respect to a center 205 of the vibrating body portion 210 (or the piezoelectric vibrating body 100). The two piezoelectric elements 110b and 110c which are driven during counterclockwise rotation are located at a point symmetry position with respect to the center 205 of the vibrating body portion 210 (or the piezoelectric vibrating body 100). If the same voltage as that of a pair of the second electrodes 150a and 150d (or the other pair of the second electrodes 150b and 150c) is applied to the second electrode 150e in the center, the piezoelectric drive unit 10 expands or contracts in the longitudinal direction. Accordingly, it is possible to increase a force applied from the contact member 20 to the rotor 50. The piezoelectric element which is driven during the bending vibrations by the drive circuit 300 may not be located at the point symmetry position. For example, the piezoelectric element may be positioned at a position deviated from the center 205. This operation of the piezoelectric drive unit 10 (or the piezoelectric vibrating body 100) is disclosed in Patent Document 1 described above (JP-A-2004-320979 or corresponding U.S. Patent No. 7224102).

### First Embodiment

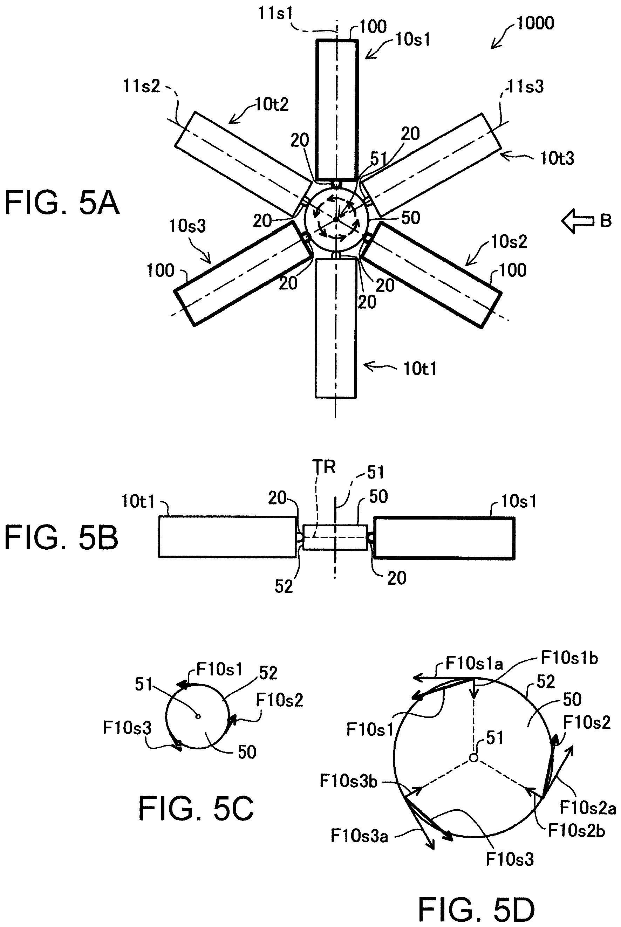

Figs. 5A to 5D are views for describing an arrangement of a piezoelectric drive unit in a piezoelectric drive device 1000 according to a first embodiment. Fig. 5A illustrates a view when the piezoelectric drive unit is viewed in a normal direction of the rotor 50. Fig. 5B illustrates a view when the piezoelectric drive device 1000 is viewed in a direction of an arrow B illustrated in Fig. 5A. In Fig. 5B, since it becomes difficult to view the drawing, piezoelectric drive units 10s3 and 10t2 and the contact member 20 are omitted. The piezoelectric drive device 1000 includes six piezoelectric drive units 10s1 to 10s3 and 10t1 to 10t3. The piezoelectric drive units 10s1 to 10s3 and 10t1 to 10t3 are classified to two groups, that is, a first piezoelectric drive group and a second piezoelectric drive group. The first piezoelectric drive group includes the piezoelectric drive units 10s1 to 10s3, and the second piezoelectric drive group includes the piezoelectric drive units 10t1 to 10t3. The contact members 20 of the three piezoelectric drive units 10s1 to 10s3 of the first piezoelectric drive group are arranged along the outer periphery of a disc shape of the rotor 50 (driven member 50) at positions having a three-fold rotational symmetry around the center 51 of the rotor 50 (in the following also denoted as "three-fold rotation symmetry position"). In other words, the contact members are arranged at positions which are rotational symmetric for rotations of 120°. The geometric center of gravity of three contact points between the three contact members 20 of the three piezoelectric drive units 10s1 to 10s3 and the rotor 50 is coincident with the center 51 of the rotor 50. The contact member 20 of the three piezoelectric drive units 10t1 to 10t3 of the second piezoelectric drive group is also arranged along the outer periphery of the rotor 50 at a three-fold rotation symmetry position around the center 51 of the rotor 50. The geometric center of gravity of three contact points between the three contact members 20 of the three piezoelectric drive units 10t1 to 10t3 and the rotor 50 is coincident with the center 51 of the rotor 50. The "geometric center of gravity" means the center of gravity of a convex and polygonal shape (triangular shape according to the embodiment) configured to include three or more contact points.

The contact member 20 of the piezoelectric drive units 10s1 to 10s3 and 10t1 to 10t3 comes into contact with an outer peripheral surface 52 (also referred to as a "contact surface 52") of the rotor 50 in the center of the thickness of the rotor 50. A trajectory TR (also referred to as a "movement trajectory TR") of the contact point shows a circle formed along the outer peripheral surface 52. The center 51 of the rotor 50 corresponds to a "movement center axis" which is the center of the movement trajectory TR of the outer peripheral surface 52. In other words, on the assumption of the movement trajectory TR on the contact surface 52 of the rotor 50 with which the multiple contact members 20 of the multiple piezoelectric drive units 10s1 to 10s3 and 10t1 to 10t3 come into contact, the center 51 of the rotor 50 is the movement center axis which is located in the center of the movement trajectory TR.

In the piezoelectric drive device 1000, the three piezoelectric drive units 10s1 to 10s3 of the first piezoelectric drive unit group press the rotor 50 at the same timing. However, the pressing timings of the respective piezoelectric drive units 10s1 to 10s3 may have a mutual difference of approximately 5% when the length of a pressing cycle is presumed to be 100%. If the difference falls within this degree, vibrations or a backlash of the rotor 50 can be sufficiently suppressed and minimized. In addition, the three piezoelectric drive units 10t1 to 10t3 of the second piezoelectric drive unit group also press the rotor 50 at the same timing. Similarly, the pressing timings of the respective piezoelectric drive units 10t1 to 10t3 may also have a mutual difference of approximately 5% when the length of a pressing cycle is presumed to be 100%. The timing at which the piezoelectric drive units 10s1 to 10s3 of the first piezoelectric drive unit group press the rotor 50 and the timing at which the piezoelectric drive units 10t1 to 10t3 of the second piezoelectric drive unit group press the rotor 50 are different from each other. The pressing is alternately performed.

Fig. 5C is a view for describing pressing forces F10s1 to F10s3 applied to the rotor 50 from the piezoelectric drive units 10s1 to 10s3 of the first piezoelectric drive unit group. The pressing forces F10s1 to F10s3 have the same magnitude, and are oriented in a tangent line direction at the contact point between the rotor 50 and the contact member 20. If a rotation symmetry force is applied in this way from the contact point located at a rotation symmetry position, no force except for the rotating force is applied to the rotor 50. The pressing forces F10s1 to F10s3 applied to the rotor 50 from the piezoelectric drive unit of the first piezoelectric drive unit group serve only to rotate the rotor 50, and a force in a translation direction is not applied to the rotor 50. As a result, it is possible to suppress the vibrations or the backlash of the rotor 50.

Fig. 5D is a view for describing a case where the pressing forces F10s1 to F10s3 are oriented in a direction other than the tangent line direction of the outer peripheral surface 52 of the rotor 50. The pressing force F10s1 can be divided into a force F10s1 a acting in the tangent line direction of the outer peripheral surface 52 and a force F10s1b acting in the center direction (radial direction) of the rotor 50. Similarly, the pressing forces F10s2 and F10s3 can also be respectively divided into forces F10s2a and F10s3a acting in the tangent line direction, and forces F10s2b and F10s3b acting in the center direction. In a case of the forces 10s1b, F10s2b, and F10s3b, a line of action passes through the center 51 of the rotor 50, and a total sum of the forces 10s1b, F10s2b, and F10s3b becomes zero. Accordingly, the force acting in the translation direction is not applied to the rotor 50. As described with reference to Fig. 5C, the forces 10s1a, F10s2a, and F10s3a acting in the tangent line direction serve only to rotate the rotor 50, and a force acing in the translation direction is not applied to the rotor 50. Therefore, even when the pressing forces F10s1 to F10s3 are oriented in the direction other than the tangent line direction of the outer peripheral surface 52 of the rotor 50, the pressing forces F10s1 to F10s3 serve only to rotate the rotor 50, and a force acing in the translation direction is not applied to the rotor 50. As a result, it is possible to suppress the vibrations or the backlash of the rotor 50.

As described above, according to the first embodiment, the respective contact members 20 of the three piezoelectric drive units 10s1 to 10s3 belonging to the first piezoelectric drive unit group are arranged at the three-fold rotation symmetry position with respect to the center 51 (movement center axis) of the rotor 50. The respective contact members 20 of the three piezoelectric drive units 10s1 to 10s3 belonging to the second piezoelectric drive unit group are arranged at the three-fold rotation symmetry position with respect to the center 51 (movement center axis) of the rotor 50. After the respective contact members 20 of the first piezoelectric drive unit group press the rotor 50, the respective contact members 20 of the second piezoelectric drive unit group press the rotor 50. Accordingly, it is possible to minimize the vibrations or the backlash of the rotor 50.

### Second Embodiment

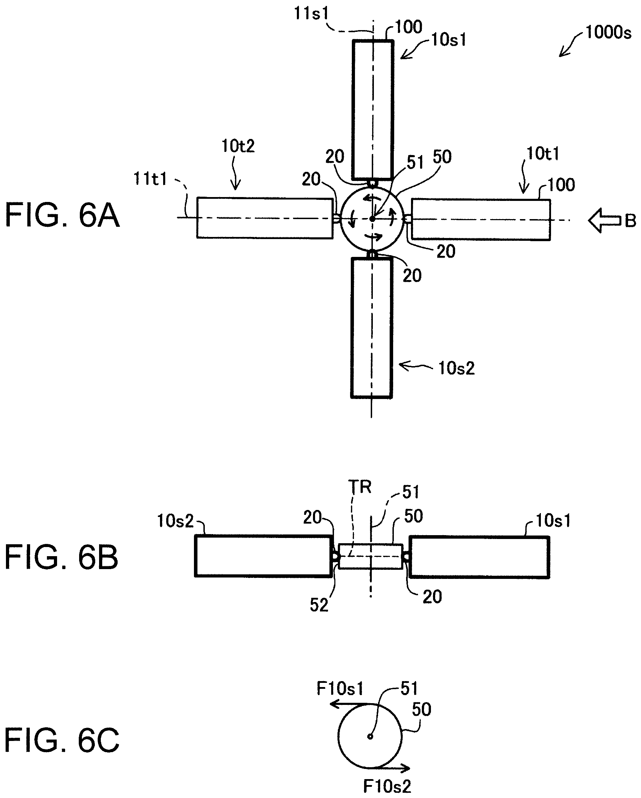

Figs. 6A to 6C are views for describing an arrangement of a piezoelectric drive unit in a piezoelectric drive device 1000s according to a second embodiment. Fig. 6A is a view when the piezoelectric drive unit is viewed in the normal direction of the rotor 50, and Fig. 6B illustrates a view when the piezoelectric drive device 1000s is viewed in a direction of an arrow B illustrated in Fig. 6A. In Fig. 6B, since it becomes difficult to view the drawing, a piezoelectric drive unit 10t1 and the contact member 20 are omitted. The piezoelectric drive device 1000s includes four piezoelectric drive units 10s1, 10s2, 10t1, and 10t2. The first piezoelectric drive group includes the piezoelectric drive units 10s1 and 10s2, and the second piezoelectric drive group includes the piezoelectric drive units 10t1 and 10t2. The contact member 20 of the two piezoelectric drive units 10s1 and 10s2 of the first piezoelectric drive group is arranged along the outer periphery of the rotor 50 at a point symmetry position around the center 51 (which is the rotation center of the rotor 50 and corresponds to a "movement center axis" in the appended claims) of the rotor 50. The geometric center of gravity of the two piezoelectric drive units 10s1 and 10s2 is coincident with the center 51 of the rotor 50. The contact member 20 of the two piezoelectric drive units 10t1 and 10t2 of the second piezoelectric drive group is also arranged along the outer periphery of the rotor 50 at a point symmetry position around the center 51 of the rotor 50. The geometric center of gravity of the two piezoelectric drive units 10t1 and 10t2 is coincident with the center 51 of the rotor 50.

The contact member 20 of the piezoelectric drive units 10s1, 10s2, 10t1, and 10t2 comes into contact with the outer peripheral surface 52 (also referred to as the "contact surface 52") of the rotor 50 in the center of the thickness of the rotor 50. The trajectory TR (also referred to as the "movement trajectory TR") of the contact point shows a circle formed along the outer peripheral surface 52.

The two piezoelectric drive units 10s1 and 10s2 of the first piezoelectric drive unit group press the rotor 50, and the two piezoelectric drive units 10t1 and 10t2 of the second piezoelectric drive unit group press the rotor 50. The pressing performed on the rotor 50 by the piezoelectric drive units 10s1 and 10s2 of the first piezoelectric drive unit group and the pressing performed on the rotor 50 by the piezoelectric drive units 10t1 and 10t2 of the second piezoelectric drive unit group are alternately performed.

Fig. 6C is a view for describing the pressing forces F10s1 and F10s2 applied to the rotor 50 from the piezoelectric drive units 10s1 and 10s2 of the first piezoelectric drive unit group. The pressing forces F10s1 and F10s2 have the same magnitude. The pressing forces F10s1 and F10s2 are respectively oriented in the tangent line direction in the contact point between the rotor 50 and the contact member 20, and the orientations are opposite to each other. The pressing forces F10s1 and F10s2 are not on the same straight line. Accordingly, the pressing forces F10s1 and F10s2 configure a couple of forces. Therefore, the pressing forces F10s1 and F10s2 serve only to rotate the rotor 50, and force acting in the translation direction is not applied to the rotor 50. As a result, it is possible to minimize the vibrations or the backlash of the rotor 50. The above-described configuration is similarly applied to the pressing force applied to the rotor 50 from the piezoelectric drive units 10t1 and 10t2 of the second piezoelectric drive unit group.

As described above, according to the second embodiment, the respective contact members 20 of the piezoelectric drive units 10s1 and 10s2 of the first piezoelectric drive unit group are arranged along the outer periphery of the rotor 50 at the point symmetry position around the center 51 of the rotor 50. The respective contact members 20 of the piezoelectric drive units 10t1 and 10t2 of the second piezoelectric drive unit group are arranged along the outer periphery of the rotor 50 at the point symmetry position around the center 51 of the rotor 50. After the respective contact members 20 of the first piezoelectric drive unit group press the rotor 50, the respective contact members 20 of the second piezoelectric drive unit group press the rotor 50. Therefore, it is possible to minimize the vibrations or the backlash of the rotor 50.

### Third Embodiment

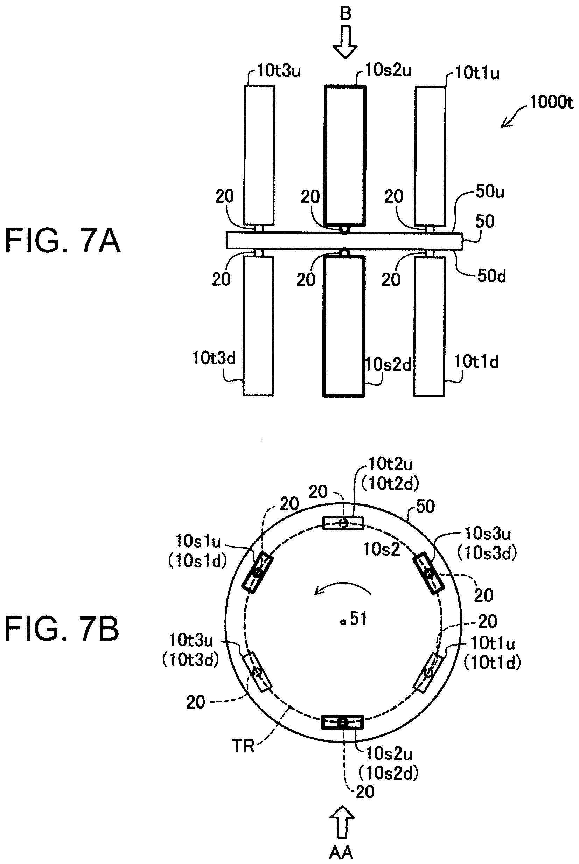

Figs. 7A and 7B are views for describing an arrangement of a piezoelectric drive unit in a piezoelectric drive device 1000t according to a third embodiment. Fig. 7A illustrates a state where the piezoelectric drive device 1000t is viewed in a direction parallel to the rotor 50, and Fig. 7B illustrates a state where the piezoelectric drive device 1000t is viewed in the normal direction of the rotor 50. The piezoelectric drive device 1000t includes 12 piezoelectric drive units 10s1u to 10s3u, 10s1d to 10s3d, 10t1u to 10t3u, and 10t1d to 10t3d. The first piezoelectric drive unit group includes the piezoelectric drive units 10s1u to 10s3u and 10s1d to 10s3d, and the second piezoelectric drive unit group includes the piezoelectric drive units 10t1u to 10t3u and 10t1d to 10t3d.

The contact member 20 of the piezoelectric drive units 10s1u to 10s3u of the first piezoelectric drive unit group is arranged on one surface 50u side of the rotor 50 at a three-fold rotation symmetry position. The contact member 20 of the piezoelectric drive units 10s1d to 10s3d is arranged on the other surface 50d side of the rotor 50 at a three-fold rotation symmetry position. The piezoelectric drive unit 10s1u and 10s1d are paired with each other, and are separately arranged at opposite positions across the rotor 50. The configuration is similarly applied to the piezoelectric drive units 10s2u and 10s2d, and the piezoelectric drive units 10s3u and 10s3d. The piezoelectric drive units 10t1u to 10t3u of the second piezoelectric drive unit group are arranged similarly to the piezoelectric drive units 10s1u to 10s3u of the first piezoelectric drive unit group.

The contact member 20 of the piezoelectric drive units 10s1u to 10s3u of the first piezoelectric drive unit group comes into contact with the one surface 50u of the rotor 50. The movement trajectory TR of the contact point is a circle formed around the center 51 of the rotor 50. The center 51 of the rotor 50 corresponds to the "movement center axis" which is the center of the movement trajectory TR on the outer peripheral surface 52. In other words, on the assumption of the movement trajectory TR on the outer peripheral surface 52 of the rotor 50 with which the multiple contact members 20 of the multiple piezoelectric drive units 10s1 to 10s3 and 10t1 to 10t3 come into contact, the center 51 of the rotor 50 is the movement center axis which is located in the center of the movement trajectory TR. The contact member 20 of the piezoelectric drive units 10t1u to 10t3u of the second piezoelectric drive unit group similarly comes into contact with the surface 50u, and similarly forms a circular movement trajectory formed around the center 51 of the rotor 50. The movement trajectory TR formed by the contact member 20 of the piezoelectric drive units 10s1u to 10s3u of the first piezoelectric drive unit group and the movement trajectory formed by the contact member 20 of the piezoelectric drive units 10t1u to 10t3u of the second piezoelectric drive unit group may overlap each other, or may not overlap each other. The contact member 20 of the piezoelectric drive units 10s1d to 10s3d of the first piezoelectric drive unit group and the piezoelectric drive units 10t1d to 10t3d of the second piezoelectric drive unit group similarly come into contact with the other surface 50d of the rotor 50. The configuration is similarly applied to the movement trajectory. The movement trajectory TR formed by the contact member 20 of the piezoelectric drive units 10s1u to 10s3u of the first piezoelectric drive unit group and the movement trajectory formed by the contact member 20 of the piezoelectric drive units 10s1d to 10s3d of the first piezoelectric drive unit group oppose each other. The movement trajectory formed by the contact member 20 of the piezoelectric drive units 10t1u to 10t3u of the second piezoelectric drive unit group and the movement trajectory formed by the contact member 20 of the piezoelectric drive units 10t1d to 10t3d of the second piezoelectric drive unit group oppose each other.

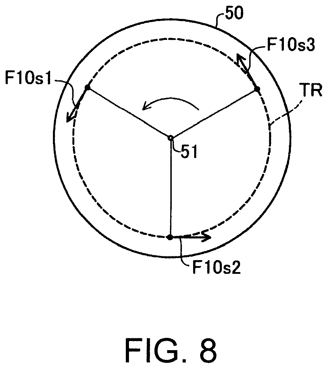

Fig. 8 is a view for describing forces F10s1, F10s3, and F10s2 applied to the rotor 50 by the piezoelectric drive units 10s1u, 10s1d, 10s2u, 10s2d, 10s3u, and 10s3d of the first piezoelectric drive unit group. The force applied by the piezoelectric drive unit 10s1u and the force applied by the piezoelectric drive unit 10s1d are applied in the same direction with the same magnitude. Thus, Fig. 8 collectively illustrates the forces as the force F10s1. The configuration is similarly applied to the forces F10s2 and F10s3. The forces F10s1, F10s2, and F10s3 have the same magnitude, and are applied in the tangent line direction of the movement trajectory TR. Therefore, similarly to the first embodiment, the forces F10s1, F10s2, and F10s3 serve only to rotate the rotor 50, and the force acting in the translation direction is not applied to the rotor 50. As a result, it is possible to suppress the vibrations or the backlash of the rotor 50.

The piezoelectric drive units 10s1u and 10s1d, 10s2u and 10s2d, and 10s3u and 10s3d respectively oppose each other across the rotor 50, and press the rotor 50. The force acting in the normal line direction of the rotor 50 (direction along the rotation axis of the rotor 50) is offset, and thus the force to swing the rotation axis of the rotor 50 is not applied. Therefore, it is possible to minimize the vibrations or the backlash of the rotor 50. The configuration is similarly applied to the piezoelectric drive units 10t1u to 10t3u and 10t1d to 10t3d of the second piezoelectric drive unit group.

As described above, according to the third embodiment, the respective contact members 20 of the six piezoelectric drive units 10s1u to 10s3u and 10s1d to 10s3d belonging to the first piezoelectric drive unit group are arranged at a three-fold rotation symmetry position with respect to the center 51 (movement center axis) of the rotor 50. The respective contact members 20 of the six piezoelectric drive units 10t1u to 10t3u and 10t1d to 10t3d belonging to the second piezoelectric drive unit group are arranged at a three-fold rotation symmetry position with respect to the center 51 (movement center axis) of the rotor 50. A timing when the respective contact members 20 of the first piezoelectric drive unit group press the rotor 50 and a timing when the respective contact members 20 of the second piezoelectric drive unit group press the rotor 50 are different from each other. The pressing is alternately performed. Therefore, it is possible to minimize the vibrations or the backlash of the rotor 50.

If the first to third embodiments are collectively described, the respective contact members 20 of the multiple (n-number, n is an integer of two or more) piezoelectric drive units belonging to the first piezoelectric drive unit group are arranged at a symmetry position (generally, the n-th rotation symmetry position or the point symmetry position) with respect to the center 51 (movement center axis) of the rotor 50. The respective contact members 20 of the multiple (n-number) piezoelectric drive units belonging to the second piezoelectric drive unit group are arranged at a symmetry position (the n-th rotation symmetry position or the point symmetry position) with respect to the center 51 of the rotor 50. The timing when the respective contact members 20 of the first piezoelectric drive unit group press the rotor 50 and the timing when the respective contact members 20 of the second piezoelectric drive unit group press the rotor 50 are different from each other. The pressing is alternately performed. Therefore, it is possible to minimize the vibrations or the backlash of the rotor 50.

According to the above-described first to third embodiments, preferably, the timings when the respective contact members 20 of the first piezoelectric drive unit group press the rotor 50 are the same as each other, and the timings when the respective contact members 20 of the second piezoelectric drive unit group press the rotor 50 are the same as each other. It is possible to further suppress the vibrations or the backlash of the rotor 50. However, with regard to the timing when the respective contact members 20 of the first piezoelectric drive unit group or the second piezoelectric drive unit group press the rotor 50, at least the two piezoelectric drive units which are paired with each other, for example, the piezoelectric drive units 10s1u and 10s1d may simultaneously press the rotor 50. A pair of the piezoelectric drive units 10s1u and 10s1d and a pair of the piezoelectric drive units 10s2u and 10s2d may not necessarily simultaneously press the rotor 50.

### Fourth Embodiment

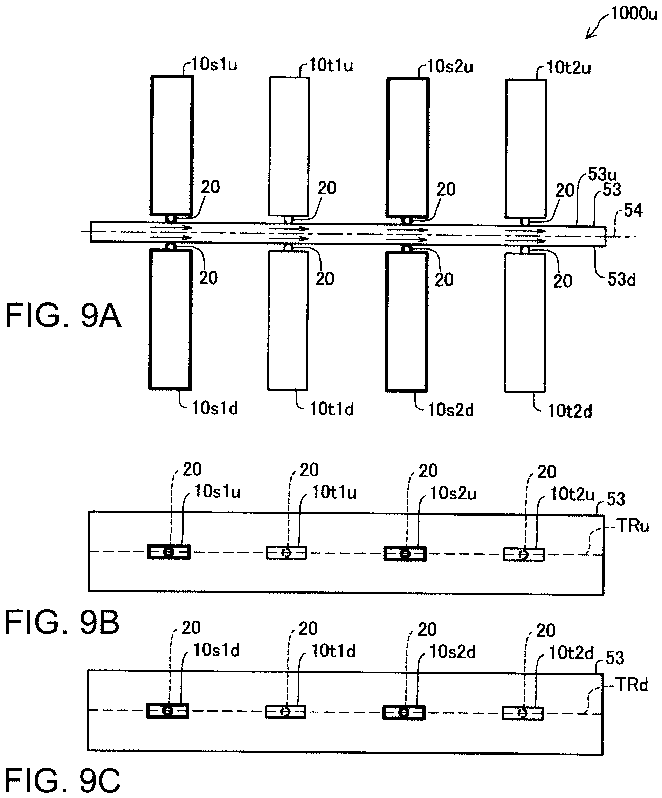

Figs. 9A to 9C are views for describing an arrangement of a piezoelectric drive unit of a piezoelectric drive device 1000u according to a fourth embodiment. Fig. 9A is a side view of the piezoelectric drive device 1000u, Fig. 9B is a top view of the piezoelectric drive device 1000u, and Fig. 9C is a bottom view of the piezoelectric drive device 1000u. The first to third embodiments employ the rotor 50 as the driven member, but a driven member 53 according to the fourth embodiment is a rectangular flat plate.

The piezoelectric drive device 1000u includes eight piezoelectric drive units 10s1u, 10s1d, 10s2u, 10s2d, 10t1u, 10t1d, 10t2u, and 10t2d. The piezoelectric drive units 10s1u, 10s1d, 10s2u, and 10s2d configure the first piezoelectric drive unit group. The piezoelectric drive units 10t1u, 10t1d, 10t2u, and 10t2d configure the second piezoelectric drive unit group.

With regard to the first piezoelectric drive unit group, the piezoelectric drive units 10s1u and 10s2u are arranged on one surface 53u side of the driven member 53, and the piezoelectric drive units 10s1d and 10s2d are arranged on the other surface 53d side of the driven member 53. The piezoelectric drive units 10s1u and 10s1d are paired with each other, and are arranged so as to oppose each other across the driven member 53. The piezoelectric drive units 10s2u and 10s2d are similarly paired with each other, and are arranged so as to oppose each other across the driven member 53. The piezoelectric drive units 10t1u, 10t1d, 10t2u, and 10t2d of the second piezoelectric drive unit group are similarly arranged. According to the embodiment, as arranged on the surface 53u side of the driven member 53 in the order of the piezoelectric drive units 10s1u, 10t1u, 10s2u, and 10t2u from the left side in the drawing, the piezoelectric drive units of the first piezoelectric drive unit group and the piezoelectric drive units of the second piezoelectric drive unit group are alternately arranged.

The contact member 20 of the piezoelectric drive units 10s1u, 10s2u, 10t1u, and 10t2u comes into contact with the one surface 53u of the driven member 53. A movement trajectory TRu of the contact point shows a straight line along the movement direction of the driven member 53 of the one surface 53u of the driven member 53. The contact member 20 of the piezoelectric drive units 10s1d, 10s2d, 10t1d, and 10t2d comes into contact with the other surface 53d of the driven member 53. A movement trajectory TRd of the contact point shows a straight line along the movement direction of the driven member 53 of the other surface 53d of the driven member 53. The driven member 53 moves along the movement trajectories TRu and TRd. If an intermediate line between the movement trajectories TRu and TRd is referred to as a movement center line 54, the respective contact members 20 of the piezoelectric drive units 10s1u, 10s1d, 10s2u, 10s2d, 10t1u, 10t1d, 10t2u, and 10t2d are arranged at a symmetry position with respect to the movement center line 54. In other words, on the assumption of the movement trajectories TRu and TRd on the surfaces 53u and 53d of the driven member 53 with which the multiple contact members 20 of the multiple piezoelectric drive units 10s1u, 10s1d, 10s2u, 10s2d, 10t1u, 10t1d, 10t2u, and 10t2d come into contact, the center line of the driven member 53 is the movement center line 54 located in the center (intermediate portion) of the movement trajectories TRu and TRd.

According to the embodiment, the respective contact members 20 of the multiple piezoelectric drive units 10s1u, 10s1d, 10s2u, and 10s2d belonging to the first piezoelectric drive unit group are arranged at a symmetry position with respect to the movement center line 54 of the driven member 53. The respective contact members 20 of the multiple piezoelectric drive units 10t1u, 10t1d, 10t2u, and 10t2d belonging to the second piezoelectric drive unit group are arranged at a symmetry position with respect to the movement center line 54 of the driven member 53. A timing when the four piezoelectric drive units 10s1u, 10s1d, 10s2u, and 10s2d of the first piezoelectric drive unit group press the driven member 53 and a timing when the four piezoelectric drive units 10t1u, 10t1d, 10t2u, and 10t2d of the second piezoelectric drive unit group press the driven member 53 are different from each other. The pressing is alternately performed. Therefore, it is possible to suppress the vibrations or the backlash of the driven member 53.

Preferably, the piezoelectric drive units which are arranged so as to oppose each other across the movement center line 54 of the driven member 53 and which are paired with each other, for example, the piezoelectric drive units 10s1u and 10s1d simultaneously press the driven member 53. In this manner, it is possible to further suppress the vibrations or the backlash of the driven member 53.

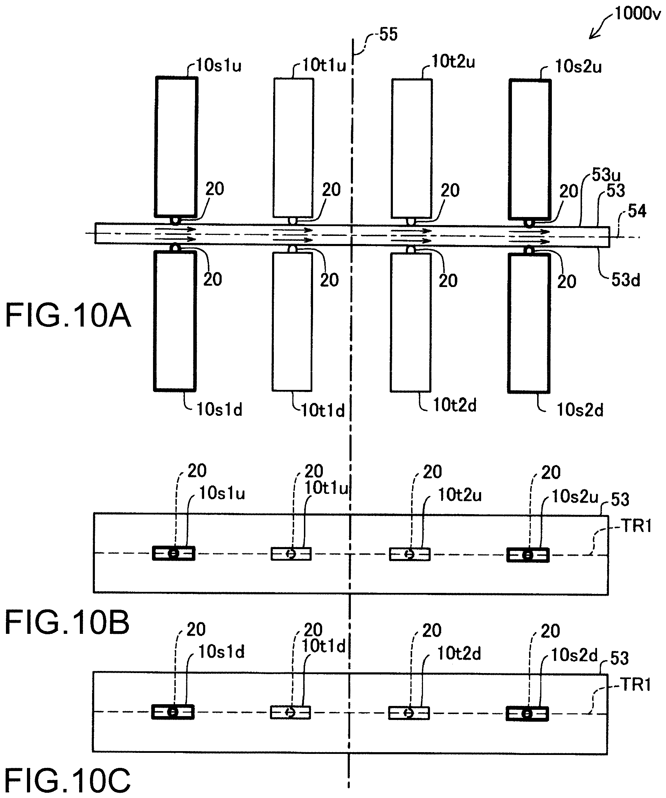

Figs. 10A to 10C are views for describing a piezoelectric drive device 1000v according to a modification example of the fourth embodiment. In the piezoelectric drive device 1000u according to the fourth embodiment, as arranged in the order of the piezoelectric drive units 10s1u, 10t1u, 10s2u, and 10t2u from the left side in the drawing, the piezoelectric drive units of the first piezoelectric drive unit group and the piezoelectric drive units of the second piezoelectric drive unit group are alternately arranged. In contrast, the piezoelectric drive device 1000v according to the modification example is different therefrom in that a surface 55 perpendicular to the movement center line 54 serves as a symmetry surface, and the piezoelectric drive units of the first piezoelectric drive unit group and the piezoelectric drive units of the second piezoelectric drive unit group are arranged at a surface symmetry position. Similarly to the third embodiment, the piezoelectric drive device 1000v according to the modification example of the third embodiment can also further suppress the vibrations or the backlash of the driven member 53.

In the above-described respective embodiments, a case of two piezoelectric drive unit groups has been described as an example. However, a configuration may be adopted in which the number of piezoelectric drive unit groups is three or more, in which timings when the piezoelectric drive units of the three piezoelectric drive unit groups press the driven member are different from each other, and in which the pressing is sequentially and alternately performed. In this manner, it is possible to suppress the vibrations or the backlash of the driven member.

### Another Embodiment of Piezoelectric Drive Device

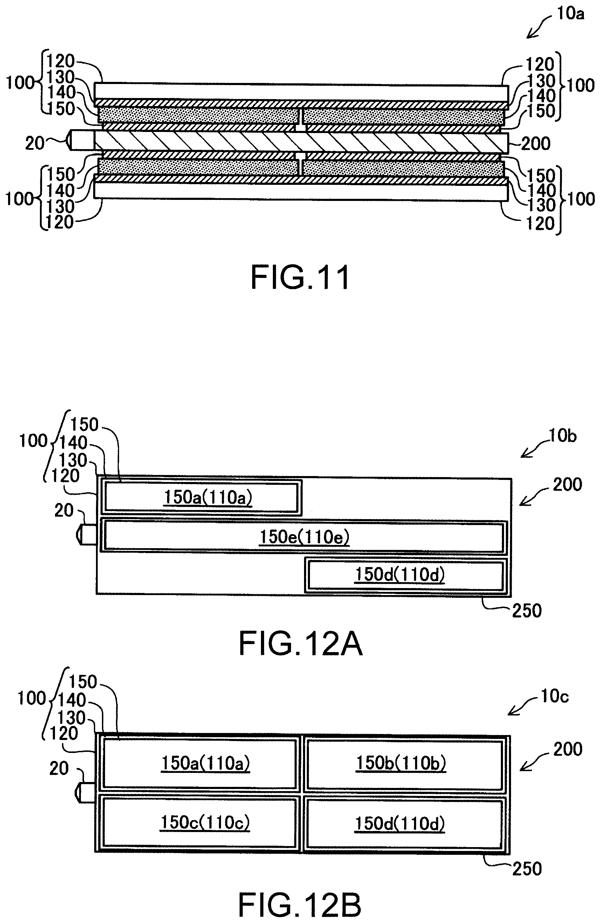

Fig. 11 is a sectional view of a piezoelectric drive unit 10a according to another embodiment of the invention, and is a view corresponding to Fig. 1B according to the first embodiment. In the piezoelectric drive unit 10a, the piezoelectric vibrating body 100 is arranged on the vibrating plate 200 in a state where the arrangement in Fig. 1B is upside down. That is, here, the second electrode 150 is arranged close to the vibrating plate 200, and the substrate 120 is arranged farthest from the vibrating plate 200. Similarly to Fig. 1B, Fig. 11 also omits the illustration of wiring (or a wiring layer and an insulating layer) for electrical connection between the second electrodes 150a to 150e, and wiring (or a wiring layer and an insulating layer) for electrical connection between the first electrode 130 and the second electrodes 150a to 150e. This piezoelectric drive unit 10a can also achieve the same advantageous effect as that according to the first embodiment. Similarly to the second embodiment, the substrate 120 of the piezoelectric vibrating body 100 may protrude from the vibrating plate 200. A shape of the contact member may be the shape similar to that according to the third embodiment.

Figs. 12A and 12B are plan views of a piezoelectric drive unit 10b according to further another embodiment of the invention, and are views corresponding to Fig. 1A according to the first embodiment. In Figs. 12A and 12B, for convenience of illustration, the connection portion 220 and the attachment portion 230 of the vibrating plate 200 are omitted in the illustration. In the piezoelectric drive unit 10b in Fig. 12A, a pair of the second electrodes 150b and 150c is omitted. The piezoelectric drive unit 10b can also rotate the rotor 50 in one direction z as illustrated in Figs. 4A and 4B. The same voltage is applied to the three second electrodes 150a, 150e, and 150d in Fig. 12A. Accordingly, the three second electrodes 150a, 150e, and 150d may be formed as one continuous electrode layer.

Fig. 12B is a plan view of a piezoelectric drive unit 10c according to further another embodiment of the invention. In the piezoelectric drive unit 10c, the second electrode 150e located in the center of Fig. 1A, and the other four second electrodes 150a, 150b, 150c, and 150d are formed so as to have an area which is larger than that in Fig. 1A. This piezoelectric drive unit 10c can also achieve substantially the same advantageous effect as that according to the first embodiment.

As is understood from Figs. 1A, 1B, 12A, and 12B, at least one electrode layer can be disposed as the second electrode 150 of the piezoelectric vibrating body 100. However, as in the embodiments illustrated in Figs. 1A, 1B, 12A, and 12B, if the second electrode 150 is disposed at an opposite angle position of the rectangular piezoelectric vibrating body 100, it is preferable since the piezoelectric vibrating body 100 and the vibrating plate 200 can be deformed into a meandering shape which is bent inside a plane thereof.

### Embodiment of Device Employing Piezoelectric Drive Device

The above-described piezoelectric drive unit 10 applies a great force to the driven body by utilizing resonance, and can be applied to various devices. For example, the piezoelectric drive unit 10 can be used as a drive device for various apparatuses such as a robot (also including an electronic component conveying apparatus (IC handler)), a medication pump, a timepiece calendar feeding device, a printing apparatus (for example, a sheet feeding mechanism. However, not applicable to a head since the vibration plate is not caused to resonate in the piezoelectric drive device used for the head). Hereinafter, a representative embodiment will be described.

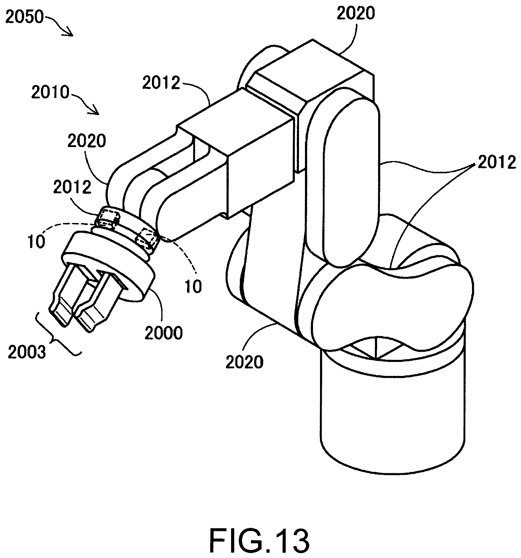

Fig. 13 is a view for describing an example of a robot 2050 which employs the above-described piezoelectric drive unit 10. The robot 2050 has an arm 2010 (also referred to as an "arm unit") which includes multiple link portions 2012 (also referred to as a "link member") and multiple joint portions 2020 for connecting the link portions 2012 to each other in a pivotable or bendable state. The above-described piezoelectric drive unit 10 is incorporated in the respective joint portions 2020, and the joint portions 2020 can be pivotally moved or bent at any desired angle by using the piezoelectric drive unit 10. A robot hand 2000 is connected to a distal end of the arm 2010. The robot hand 2000 includes a pair of gripping portions 2003. The piezoelectric drive unit 10 is also incorporated in the robot hand 2000. The robot hand 2000 can grip an object by using the piezoelectric drive unit 10 so as to open and close the gripping portions 2003. The piezoelectric drive unit 10 is also disposed between the robot hand 2000 and the arm 2010. The robot hand 2000 can be rotated with respect to the arm 2010 by using the piezoelectric drive unit 10.

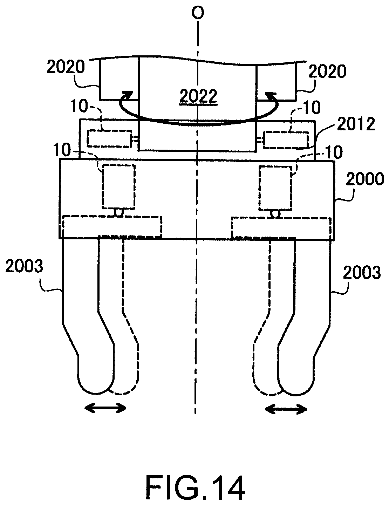

Fig. 14 is a view for describing a wrist portion of the robot 2050 illustrated in Fig. 13. The joint portions 2020 on the wrist interpose a wrist pivotally moving portion 2022 therebetween, and the link portion 2012 on the wrist is attached to the wrist pivotally moving portion 2022 so as to be pivotally movable around a central axis O of the wrist pivotally moving portion 2022. The wrist pivotally moving portion 2022 includes the piezoelectric drive unit 10. The piezoelectric drive unit 10 pivotally moves the link portion 2012 on the wrist and the robot hand 2000 around the central axis O. The multiple gripping portions 2003 are erected in the robot hand 2000. A proximal end portion of the gripping portion 2003 is movable inside the robot hand 2000. The piezoelectric drive unit 10 is mounted on a base portion of the gripping portion 2003. Therefore, the gripping portions 2003 are moved so as to grip a target by operating the piezoelectric drive unit 10.

As the robot, without being limited to a single arm robot, the piezoelectric drive unit 10 can also be applied to a multi-arm robot in which the number of arms is two or more. Here, in addition to the piezoelectric drive unit 10, the joint portion 2020 on the wrist or the inside of the robot hand 2000 includes a power line for supplying power to various devices such as a force sensor and a gyro sensor or signal line for transmitting a signal. Accordingly, enormous wiring is needed. Therefore, it was very difficult to arrange the wiring inside the joint portion 2020 or the robot hand 2000. However, the piezoelectric drive unit 10 according to the above-described embodiments can decrease a drive current compared to a normal electric motor or the piezoelectric drive device in the related art. Therefore, it is possible to arrange the wiring even in a small space such as the joint portion 2020 (particularly, a distal end joint portion of the arm 2010) and the robot hand 2000.

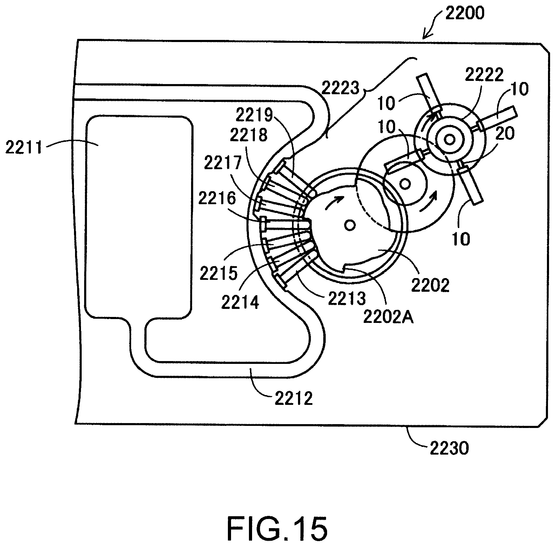

Fig. 15 is a view for describing an example of a liquid feeding pump 2200 employing the above-described piezoelectric drive unit 10. In the liquid feeding pump 2200, a case 2230 internally has a reservoir 2211, a tube 2212, the piezoelectric drive unit 10, a rotor 2222, a deceleration transmission mechanism 2223, a cam 2202, and multiple fingers 2213, 2214, 2215, 2216, 2217, 2218, and 2219. The reservoir 2211 is an accommodation section for accommodating a liquid which is a transport target. The tube 2212 is used in order to transport the liquid fed from the reservoir 2211. The contact member 20 of the piezoelectric drive unit 10 is disposed in a state of being pressed against a side surface of the rotor 2222, and the piezoelectric drive unit 10 rotatably drives the rotor 2222. A rotation force of the rotor 2222 is transmitted to the cam 2202 via the deceleration transmission mechanism 2223. The fingers 2213 to 2219 are members for blocking the tube 2212. If the cam 2202 is rotated, the fingers 2213 to 2219 are sequentially pressed radially outward by a protrusion portion 2202A of the cam 2202. The fingers 2213 to 2219 block the tube 2212 sequentially from the upstream side (reservoir 2211 side) in the transport direction. In this manner, the liquid inside the tube 2212 is sequentially transported to the downstream side. According to this configuration, an extremely small amount of the liquid can be accurately fed. Moreover, a miniaturized liquid feeding pump 2200 can be realized. An arrangement of each member is not limited to the illustrated example. A configuration may be adopted in which a ball disposed in the rotor 2222 blocks the tube 2212 without providing the fingers. The above-described liquid feeding pump 2200 can be utilized for a drug dispensing apparatus which administers a drug solution such as insulin to a human body. Here, a drive current is decreased by using the piezoelectric drive unit 10 according to the above-described embodiments, compared to the piezoelectric drive unit in the related art. Accordingly, it is possible to minimize power consumption of the drug dispensing apparatus. Therefore, the piezoelectric drive unit 10 is particularly effective when the drug dispensing apparatus is driven by a battery.

### Modification Example

Without being limited to the above-described examples or embodiments, the invention can be embodied in various aspects within the scope defined by the appended claims. For example, the invention can also be modified as follows.

### Modification Example 1

According to the above-described embodiments, each one of the piezoelectric vibrating bodies 100 is disposed on both surfaces of the vibrating plate 200. However, any one of the piezoelectric vibrating bodies 100 can be omitted. However, if each of the piezoelectric vibrating bodies 100 is disposed on both surfaces of the vibrating plate 200, it is preferable since the vibrating plate 200 is more easily deformed into a meandering shape which is bent inside a plane thereof.

Hitherto, the embodiments of the invention have been described with reference to some examples. However, the above-described embodiments are provided in order to facilitate the understanding of the invention, and are not intended to limit the invention. The invention can be modified or improved without departing from the scope of the appended claims.

## Claims

1. A piezoelectric drive device (1000, 1000s, 1000t, 1000u, 1000v) comprising:
multiple piezoelectric drive units (10s1 to 10s3, 10t1 to 10t3, and 10s1u to 10s3u, 10s1d to 10s3d, 10t1u to 10t3u, 10t1d to 10t3d) that drive a driven member (50, 53),
wherein each of the multiple piezoelectric drive units has a vibrating plate (200), a piezoelectric vibrating body (100) which is disposed on the vibrating plate, and a contact member (20) which can come into contact with the driven member,
wherein the multiple piezoelectric drive units belong to a first piezoelectric drive unit group and a second piezoelectric drive unit group,
wherein the respective contact members of the multiple piezoelectric drive units belonging to the first piezoelectric drive unit group are arranged at a position which is symmetrical to a movement center axis or a movement center line of the driven member,
wherein the respective contact members of the multiple piezoelectric drive units belonging to the second piezoelectric drive unit group are arranged at a position which is symmetrical to a movement center axis (51) or a movement center line (54) of the driven member, and
the piezoelectric drive device being configured such that a timing when the respective contact members of the first piezoelectric drive unit group press the driven member is different from a timing when the respective contact members of the second piezoelectric drive unit group press the driven member,
**characterized in that**
each piezoelectric vibrating body (100) includes a substrate (120), a first electrode (130) which is formed on the substrate (120), a piezoelectric substance (140) which is formed on the first electrode (130), and a second electrode (150) which is formed on the piezoelectric substance (140),
wherein a thickness of the piezoelectric substance (140) is within a range of 0.05 µm to 20 µm.

2. The piezoelectric drive device according to claim 1, being configured such that
timings when the respective contact members of the first piezoelectric drive unit group press the driven member are the same among each other, and
wherein timings when the respective contact members of the second piezoelectric drive unit group press the driven member are the same among each other.

3. The piezoelectric drive device according to claim 1 or 2,
wherein the driven member (50) has a disc shape,
wherein the respective contact members of the first piezoelectric drive unit group are arranged at a point symmetry position or a rotation symmetry position with respect to the movement center axis, and
wherein the respective contact members of the second piezoelectric drive unit group are arranged at a point symmetry position or a rotation symmetry position with respect to the movement center axis.

4. The piezoelectric drive device according to claim 3,
wherein the geometric center of gravity of contact points, at which the respective contact members of the first piezoelectric drive unit group come into contact with the driven memeber, and the geometric center of gravity of contact points, at which the respective contact members of the second piezoelectric drive unit group come into contact with the driven member, are located at a position of the movement center axis.

5. The piezoelectric drive device according to any one of the preceding claims,
wherein the respective contact members of the first piezoelectric drive unit group are separately arranged at opposite positions across the driven member, and
wherein the respective contact members of the second piezoelectric drive unit group are separately arranged at opposite positions across the driven member.

6. A robot (2050) comprising:
multiple link portions (2012);
a joint portion (2020) that connects at least two of the multiple link portions to each other; and
the piezoelectric drive device according to any one of the preceding claims, the piezoelectric drive device being incorporated in the joint portion for pivotally moving the multiple link portions.

7. A method of driving the robot according to claim 6, comprising:
driving the piezoelectric drive device by applying a cyclically varying voltage to the piezoelectric vibrating body; and
pivotally moving the multiple link portions with the piezoelectric drive device incorporated in the joint portion.

## Patentansprüche

1. Piezoelektrische Antriebsvorrichtung (1000, 1000s, 1000t, 1000u, 1000v), umfassend:
mehrere piezoelektrische Antriebseinheiten (10s1 bis 10s3, 10t1 bis 10t3 und 10s1u bis 10s3u, 10s1d bis 10s3d, 10t1u bis 10t3u, 10t1d bis 10t3d), die ein angetriebenes Element (50, 53) antreiben,
wobei jede der mehreren piezoelektrischen Antriebseinheiten eine Vibrationsplatte (200), einen piezoelektrischen Vibrationskörper (100), der auf der Vibrationsplatte angeordnet ist, und ein Kontaktelement (20), das mit dem angetriebenen Element in Kontakt kommen kann, aufweist,
wobei die mehreren piezoelektrischen Antriebseinheiten zu einer ersten piezoelektrischen Antriebseinheitsgruppe und einer zweiten piezoelektrischen Antriebseinheitsgruppe gehören,
wobei die entsprechenden Kontaktelemente der mehreren piezoelektrischen Antriebseinheiten, die zu der ersten piezoelektrischen Antriebseinheitsgruppe gehören, an einer Position angeordnet sind, die symmetrisch zu einer Bewegungszentrumsachse oder einer Bewegungszentrumslinie des angetriebenen Elements ist,
wobei die entsprechenden Kontaktelemente der mehreren piezoelektrischen Antriebseinheiten, die zu der zweiten piezoelektrischen Antriebseinheitsgruppe gehören, an einer Position angeordnet sind, die symmetrisch zu einer Bewegungszentrumsachse (51) oder einer Bewegungszentrumslinie (54) des angetriebenen Elements ist, und
wobei die piezoelektrische Antriebsvorrichtung so konfiguriert ist, dass sich ein Zeitpunkt, zu dem die entsprechenden Kontaktelemente der ersten piezoelektrischen Antriebseinheitsgruppe das angetriebene Element drücken, von einem Zeitpunkt unterscheidet, zu dem die entsprechenden Kontaktelemente der zweiten piezoelektrischen Antriebseinheitsgruppe das angetriebene Element drücken,
**dadurch gekennzeichnet, dass**
jeder piezoelektrische Vibrationskörper (100) ein Substrat (120), eine erste Elektrode (130), die auf dem Substrat (120) ausgebildet ist, eine piezoelektrische Substanz (140), die auf der ersten Elektrode (130) ausgebildet ist, und eine zweite Elektrode (150), die auf der piezoelektrischen Substanz (140) ausgebildet ist, einschließt,
wobei eine Dicke der piezoelektrischen Substanz (140) in einem Bereich von 0,05 µm bis 20 µm liegt.

2. Piezoelektrische Antriebsvorrichtung nach Anspruch 1, die so konfiguriert ist, dass
Zeitpunkte, zu denen die entsprechenden Kontaktelemente der ersten piezoelektrischen Antriebseinheitsgruppe das angetriebene Element drücken, untereinander dieselben sind, und
wobei Zeitpunkte, zu denen die entsprechenden Kontaktelemente der zweiten piezoelektrischen Antriebseinheitsgruppe das angetriebene Element drücken, untereinander dieselben sind.

3. Piezoelektrische Antriebsvorrichtung nach Anspruch 1 oder 2,
wobei das angetriebene Element (50) eine Scheibenform aufweist,
wobei die entsprechenden Kontaktelemente der ersten piezoelektrischen Antriebseinheitsgruppe an einer Punktsymmetrieposition oder einer Rotationssymmetrieposition bezüglich der Bewegungszentrumsachse angeordnet sind, und
wobei die entsprechenden Kontaktelemente der zweiten piezoelektrischen Antriebseinheitsgruppe an einer Punktsymmetrieposition oder einer Rotationssymmetrieposition bezüglich der Bewegungszentrumsachse angeordnet sind.

4. Piezoelektrische Antriebsvorrichtung nach Anspruch 3,
wobei sich das geometrische Zentrum von Kontaktpunkten, an denen die entsprechenden Kontaktelemente der ersten piezoelektrischen Antriebseinheitsgruppe mit dem angetriebenen Element in Kontakt kommen, und das geometrische Zentrum von Kontaktpunkten, an denen die entsprechenden Kontaktelemente der zweiten piezoelektrischen Antriebseinheitsgruppe mit dem angetriebenen Element in Kontakt kommen, an einer Position der Bewegungszentrumsachse befinden.

5. Piezoelektrische Antriebsvorrichtung nach einem der vorstehenden Ansprüche,
wobei die entsprechenden Kontaktelemente der ersten piezoelektrischen Antriebseinheitsgruppe einzeln an sich quer über das angetriebene Element gegenüberliegenden Positionen angeordnet sind, und
wobei die entsprechenden Kontaktelemente der zweiten piezoelektrischen Antriebseinheitsgruppe einzeln an sich quer über das angetriebene Element gegenüberliegenden Positionen angeordnet sind.

6. Roboter (2050), umfassend:
mehrere Verbindungsabschnitte (2012);
einen Gelenkabschnitt (2020), der zumindest zwei der mehreren Verbindungsabschnitte miteinander verbindet; und
die piezoelektrische Antriebsvorrichtung nach einem der vorstehenden Ansprüche, wobei die piezoelektrische Antriebsvorrichtung zum drehenden Bewegen der mehreren Verbindungsabschnitte in den Gelenkabschnitt eingebaut ist.

7. Verfahren zum Antreiben des Roboters nach Anspruch 6, umfassend:
Antreiben der piezoelektrischen Antriebsvorrichtung durch Anlegen einer sich zyklisch verändernden Spannung an den piezoelektrischen Vibrationskörper; und
drehendes Bewegen der mehreren Verbindungsabschnitte mit der in den Gelenkabschnitt eingebauten piezoelektrischen Antriebsvorrichtung.

## Revendications

1. Dispositif d'entraînement piézoélectrique (1000, 1000s, 1000t, 1000u, 1000v) comprenant :
de multiples unités d'entraînement piézoélectriques (10s1 à 10s3, 10t1 à 10t3 et 10s1u à 10s3u, 10s1d à 10s3d, 10t1u à 10t3u, 10t1d à 10t3d) qui entraînent un élément entraîné (50, 53),
dans lequel chacune des multiples unités de d'entraînement piézoélectriques a une plaque vibrante (200), un corps vibrant piézoélectrique (100) qui est disposé sur la plaque vibrante, et un élément de contact (20) qui peut entrer en contact avec l'élément entraîné,
dans lequel les multiples unités d'entraînement piézoélectriques appartiennent à un premier groupe d'unités d'entraînement piézoélectriques et à un second groupe d'unités d'entraînement piézoélectriques,
dans lequel les éléments de contact respectifs des multiples unités d'entraînement piézoélectriques appartenant au premier groupe d'unités d'entraînement piézoélectriques sont agencés à une position qui est symétrique par rapport à un axe central de mouvement ou à une ligne centrale de mouvement de l'élément entraîné,
dans lequel les éléments de contact respectifs des multiples unités d'entraînement piézoélectriques appartenant au second groupe d'unités d'entraînement piézoélectriques sont agencés à une position qui est symétrique par rapport à un axe central de mouvement (51) ou à une ligne centrale de mouvement (54) de l'élément entraîné, et
le dispositif d'entraînement piézoélectrique étant configuré de sorte qu'une synchronisation quand les éléments de contact respectifs du premier groupe d'unités d'entraînement piézoélectriques pressent l'élément entraîné diffère d'une synchronisation quand les éléments de contact respectifs du second groupe d'unités d'entraînement piézoélectriques pressent l'élément entraîné,
**caractérisé en ce que**
chaque corps vibrant piézoélectrique (100) inclut un substrat (120), une première électrode (130) qui est formée sur le substrat (120), une substance piézoélectrique (140) qui est formée sur la première électrode (130), et une seconde électrode (150) qui est formée sur la substance piézoélectrique (140),
dans lequel une épaisseur de la substance piézoélectrique (140) est dans une plage de 0,05 µm à 20 µm.

2. Dispositif d'entraînement piézoélectrique selon la revendication 1, étant configuré de sorte que
des synchronisations quand les éléments de contact respectifs du premier groupe d'unités d'entraînement piézoélectriques pressent l'élément entraîné sont les mêmes entre elles, et
dans lequel des synchronisations quand les éléments de contact respectifs du second groupe d'unités d'entraînement piézoélectrique pressent l'élément entraîné sont les mêmes entre elles.

3. Dispositif d'entraînement piézoélectrique selon la revendication 1 ou 2,
dans lequel l'élément entraîné (50) a une forme de disque,
dans lequel les éléments de contact respectifs du premier groupe d'unités d'entraînement piézoélectriques sont agencés à une position de symétrie ponctuelle ou une position de symétrie de rotation par rapport à l'axe central de mouvement, et
dans lequel les éléments de contact respectifs du second groupe d'unités d'entraînement piézoélectriques sont agencés à une position de symétrie ponctuelle ou une position de symétrie de rotation par rapport à l'axe central de mouvement.

4. Dispositif d'entraînement piézoélectrique selon la revendication 3,
dans lequel le centre de gravité géométrique de points de contact, au niveau desquels les éléments de contact respectifs du premier groupe d'unités d'entraînement piézoélectriques entrent en contact avec l'élément entraîné, et le centre de gravité géométrique de points de contact, au niveau desquels les éléments de contact respectifs du second groupe d'unités d'entraînement piézoélectriques entrent en contact avec l'élément entraîné, sont situés à une position de l'axe central de mouvement.

5. Dispositif d'entraînement piézoélectrique selon l'une quelconque des revendications précédentes,
dans lequel les éléments de contact respectifs du premier groupe d'unités d'entraînement piézoélectriques sont agencés séparément à des positions opposées d'un bout à l'autre de l'élément entraîné, et
dans lequel les éléments de contact respectifs du second groupe d'unités d'entraînement piézoélectriques sont agencés séparément à des positions opposées d'un bout à l'autre de l'élément entraîné.

6. Robot (2050) comprenant :
de multiples portions de liaison (2012) ;
une portion d'articulation (2020) qui relie au moins deux des portions de liaison multiples l'une à l'autre ; et
le dispositif d'entraînement piézoélectrique selon l'une quelconque des revendications précédentes, le dispositif d'entraînement piézoélectrique étant incorporé dans la portion d'articulation pour déplacer de manière pivotante les multiples portions de liaison.

7. Procédé d'entraînement du robot selon la revendication 6, comprenant :
l'entraînement du dispositif d'entraînement piézoélectrique en appliquant une tension variant de façon cyclique au corps vibrant piézoélectrique ; et
le déplacement de manière pivotante des multiples portions de liaison avec le dispositif d'entraînement piézoélectrique incorporé dans la portion d'articulation.
